# EUROPEAN PATENT SPECIFICATION

(11) **EP 2 581 561 B1**
(45) Date of publication and mention of the grant of the patent: **01.03.2017**
(21) Application number: 12188148.6
(22) Date of filing: 11.10.2012
(51) Int. Cl.: F01D 19/00, F02C 3/20, F02C 9/34, F02C 9/40

(54) **Operating method for hydrogen /natural gas blends within a reheat gas turbine and gas turbine**
Betriebsverfahren für Wasserstoff-/Erdgasgemische innerhalb einer Wiedererhitzungsgasturbine und Gasturbine
Procédé d'exploitation de mélanges d'hydrogène/gaz naturel dans une turbine à gaz de réchauffage et turbine à gaz

(30) Priority: 12.10.2011 US 201161546321 P
(43) Date of publication of application: 17.04.2013
(73) Proprietor: General Electric Technology GmbH, 5400 Baden (CH)
(72) Inventor: Wood, John Philip, 5406 Rütihof (CH); Poyyapakkam, Madhavan, 6343 Rotkreuz (CH); Ciani, Andrea, 8057 Zürich (CH); Syed, Khawar, 5452 Oberrohrdorf (CH); Genin, Franklin Marie, 5415 Nussbaumen (CH); Lachaux, Thierry, 5507 Mellingen (CH); Eroglu, Adnan, 5417 Untersiggenthal (CH)
(74) Representative: Bernotti, Andrea

(56) References cited:
- EP-A2- 1 752 709
- EP-A2- 2 204 561
- US-A1- 2004 226 299
- US-A1- 2009 107 105

## Description

### FIELD OF INVENTION

The present invention relates to the field of combustion technology for gas turbines.

### BACKGROUND OF THE INVENTION

The investigation of hydrogen rich fuels has been ongoing for some time due to its significant environmental benefits. Somme examples are disclosed in documents US 2004/0226299, EP1752709, US 2009/107105, EP2204561. In particular two specific routes for hydrogen combustion have been widely investigated, these are:
1. Combustion of technically pure hydrogen (hydrogen diluted with inerts such that the hydrogen is the dominant volumetric species) in the context of precombustion carbon capture.
2. Combustion of synthetic gasses (hydrogen and carbon monoxide blends) derived from the gasification of biological material providing a carbon neutral fuel.

In both of these processes a fuel production facility would be used upstream of the gas turbine which would provide a continuous consistent supply of the fuel gas.

However, a new context for the provision of hydrogen has been proposed. This approach stems from the fact that many renewable energy sources are capable of generating consistent quantities of electricity regardless of the demand for power. This leads to potentially excess electricity at off peak times and the potential for having to reduce generating capacity and the inability to increase production at peak load. It has been previously proposed that excess power can be used at off-peak times to produce hydrogen by the electrolysis that can be burnt with no carbon emissions when required.

The obvious approach to utilize this fuel to provide peak power is through a gas turbine. As there are inefficiencies at each stage of' the conversion process it is clear that the efficiency of' the gas turbine must be maximized in order for the approach to be practical, which suggests the use of large scale combined cycle gas turbines. Such a unit would have a hydrogen consumption of approximately 6.5kg/s at base load. It is consequently probable that insufficient hydrogen would be available for sustained base load operation. It should also be noted that many alternative energy sources provide inconsistent power outputs (e.g. wind or wave generators) that would cause the available quantity to vary with time. It is therefore probable that the proposed gas turbine would have to operate with a varying mix of natural gas and hydrogen.

In a reheat gas turbine two combustion systems, based on significantly different physical processes, are utilized. In the first system, fuel and air are premixed and a propagating flame is stabilized using carefully controlled aerodynamic structures. In the second combustion system vitiated air is mixed with the fuel. As the combustor inlet temperature is greater than the auto-ignition temperature of the fuel, combustion occurs after a characteristic delay time. As such, there is no need for complex aerodynamic flame stabilization devices as the flame will be self stabilizing at a predetermined location given by the flow velocity and the characteristic auto-ignition delay time.

Due to the different stabilization mechanisms in the two combustors the influence of' using hydrogen within them differs. The aerodynamic stabilization used in the first combustor means the stability of this combustor can be influenced by changes in the burning velocity, which is strongly influenced by the fuel consumption and operating conditions. The auto-ignition delay time, the stabilizing factor in the reheat burner, is also influenced by these parameters but as the axial location of the flame can alter within the combustor with limited impact on performance the potential exists to design a reheat combustion system that can tolerate a range of' fuel compositions.

It is also possible to control the flame location through adjusting the inlet temperature of the vitiated air entering the reheat combustor through the impact this parameter has on the auto-ignition delay time. This is only achievable by reducing the flame temperature in the first combustion system; therefore the extent to which this can be achieved is limited by the flame stability in this burner.

Another characteristic of hydrogen fuel is that the auto-ignition delay time has a complex relationship with pressure initially falling as pressure is increased (in contrast to natural gas). This means that the use of hydrogen poses particular challenges during starting the engine. It has been known to use up to 5% hydrogen for emissions and LBO (lean blow off) improvement.

### SUMMARY OF INVENTION

A gas turbine is operated using a varying blend of a first fuel, preferably natural gas, and a second fuel comprising hydrogen. The hydrogen concentration is varied depending on operating conditions in order to reduce emissions of CO and NOx, and/or to mitigate LBO. The fuel mixture is varied using a controller based on a combination of factors in a modular operation concept to address different issues according to relevant load limitations. A method of operating a gas turbine according to this modular operational concept is also provided.

In one aspect, a multi-stage gas turbine operating with a reheat cycle is used to burn a varying blend of natural gas and hydrogen, depending on the availability of hydrogen and the operating conditions. Different concentrations of hydrogen can be utilized in the two combustion systems. The fuel used in the second combustor is enriched with the required concentration of hydrogen, with the appropriate flame position being achieved by adjusting the inlet temperature to the second combustor to improve LBO. As the required flame temperature of the first combustor is reduced, the stability range can be increased by the addition of a controlled amount of hydrogen to the fuel. Additionally, NOx and CO emissions can be reduced.

In one aspect of the invention, up to 20% hydrogen is added to the natural gas fuel for reduced NOx emission at baseload conditions. The NOx reduction appears to be due to improvement in the mixing quality due to increased turbulence and diffusivity caused by the addition of hydrogen. There is also a prompt reduction due to the hydrogen addition. Further reductions can be indirectly achieved by operating at a lower stage 1 ratio.

In another aspect, up to 20% hydrogen is added to the natural gas fuel to reduce CO emissions at partial load conditions. This appears to be due to more reactivity of the fuel air mixture as well as possibly more OH radicals being generated for CO oxidation.

In another aspect, addition of 30% or more hydrogen is added to the natural gas fuel to improve LBO.

This can be used in connection with single as well as sequential combustors.

Further, the hydrogen can be added based on a combination of the above-noted factors in a modular operation concept to address different issues according to relevant load limitations. For example, higher hydrogen can be used at idle for LBO mitigation; intermediate hydrogen addition can be used at partial load conditions for CO and NOx emission reduction; and low hydrogen addition in combination with a decreased S1 R (Stage 1 Ratio) can be utilized at baseload for low NOx emissions.

All such control actions are handled within the control system for the turbine based on the required and/or available hydrogen supply for the particular operating condition and objective.

### BRIEF DESCRIPTION OF THE DRAWINGS

The following detailed description of the preferred embodiment of the present invention will be better understood when read in conjunction with the appended drawings. For the purpose of illustrating the invention, there are shown in the drawings embodiments which are presently preferred. It is understood, however, that the invention is not limited to the precise arrangements and instrumentalities shown. In the drawings:
Fig. 1 is a schematic view of a turbine with sequential combustion;
Fig. 2 is a pressure - ignition delay time graph at the inlet of the reheat combustor;
Fig. 3 is a graph showing LBO (lean blow off) versus hydrogen content for various S1 R (stage 1 ratios - which is the S1 fuel gas mass flow to total gas mass flow ration);
Fig. 4 is a graph showing NOx emissions versus low S1 R ratio for various hydrogen concentrations;
Fig. 5 is a graph showing NOx emissions versus high S1R ratio for various hydrogen concentrations;
Fig. 6 is a graph showing CO emissions versus low S1 R ratio for various hydrogen concentrations;
Fig. 7 is a graph showing CO emissions versus high S1 R ratio for various hydrogen concentrations;
Fig. 8 is a graph showing Zeta versus hydrogen content for various S1 R ratios in a lower region;
Fig. 9 is a graph showing Zeta versus hydrogen content for various S1 R ratios in a higher region;
Fig. 10 is a diagram of a single stage gas turbine operating with a blend of natural gas and hydrogen that is controlled depending on hydrogen availability and/or operating conditions; and
Fig. 11 is a diagram of a multi-stage gas turbine operating with a reheat cycle to burn a blend of natural gas and hydrogen that is controlled depending on hydrogen availability and/or operating conditions.

### DETAILED DESCRIPTION OF THE PREFERRED EMBODIMENTS

The disclosure deals with current and future capability to burn hydrogen enriched natural gas as a means of utilizing excess renewable generating capacity during off-peak periods. It relates to an operating method for the operation of an industrial gas turbine with a hydrogen enriched natural gas fuel and/or a diluted hydrogen fuel.

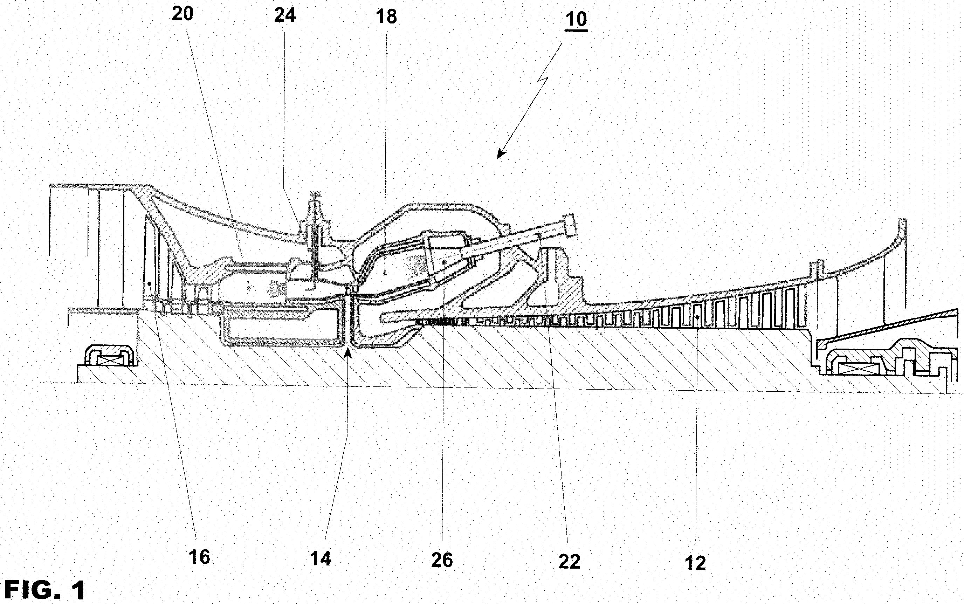

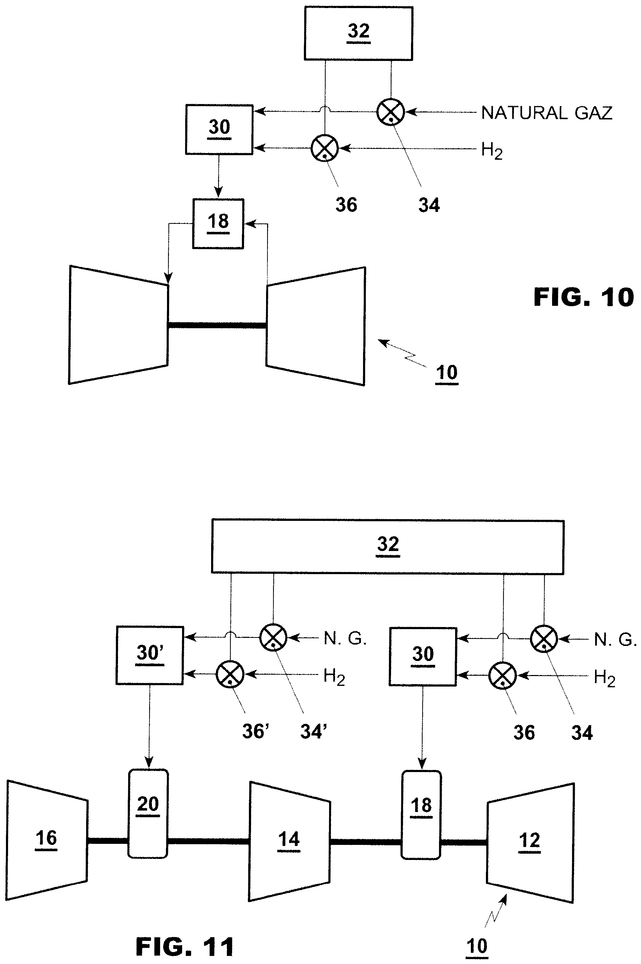

Fig. 1 shows a reheat gas turbine 10 with a compressor 12, high pressure and low pressure output turbine blade sections 14, 16, and first and second annular combustors 18, 20. Fuel is injected into the combustors 18, 20 with fuel lances 22, 24, for the respective chambers 18, 20. The fuel is preferably a controlled mix of natural gas and hydrogen. As shown schematically in Fig. 11, the fuel is blended in fuel blending systems 30, 30', preferably mixing chambers, associated with each turbine stage in which varying amounts of natural gas and hydrogen are mixed depending on operating conditions and/or the availability of hydrogen required for one or both combustors 18, 20. The mixture is controlled by a controller 32, which can be a programmable logic controller (pic) or computer based controller that controls servo valves 34, 34' for natural gas for each turbine stage and servo valves 36, 36' for hydrogen. The fuel is fed to either or both of the combustors 18, 20, shown in Figs. 1 and 11. Burners 26 are provided to ignite the fuel/compressed air mixture in the first annular combustor 18, while the second (reheat) combustor 20 receives hot gases from the first combustor 18 at a high enough temperature to auto-ignite the additional fuel. Separate fuel blending systems 30, 30' allow the combustors 18, 20 to receive different blends.

The operating method for a turbine 10 provides different stabilization mechanisms utilized within the two stage combustion system of a reheat gas turbine 10, flexibility inherent in a reheat turbine as to which point in the operating cycle the reheat burner operates, and hydrogen to increase fuel reactivity, and hence burner stability, when operating the reheat combustor 20 at low inlet temperatures or part load.

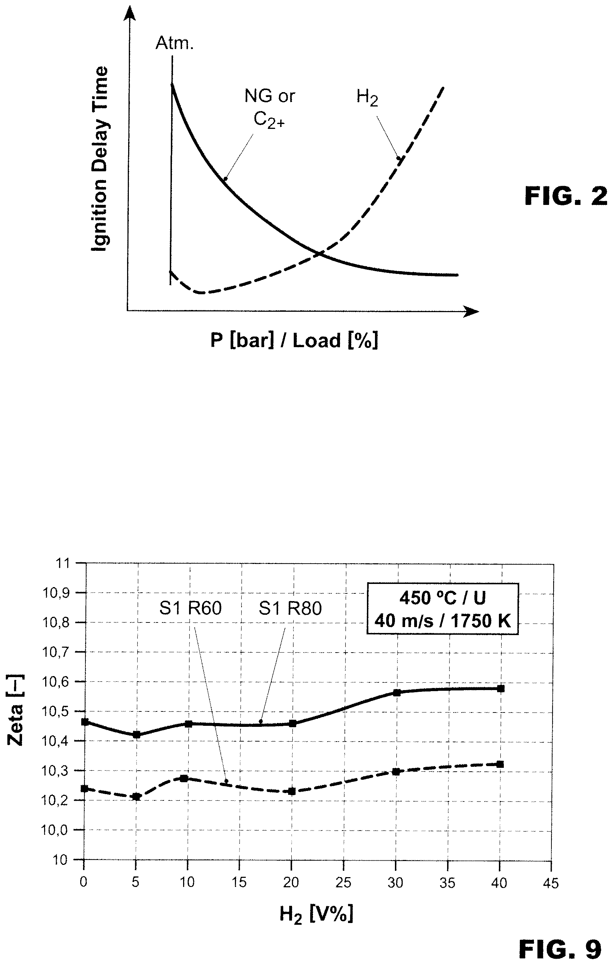

The reactivity of hydrogen fuel at temperatures characteristic of the inlet of a reheat combustor decreases with increasing pressure (i.e. load) as shown in Fig. 2. This is opposite to the trend of natural gas. This behavior of hydrogen reactivity causes a significant difficulty in the design of reheat combustion hardware, as it is impossible to optimize both for base load operation and run-up safety. For this reason it is proposed that the turbine 10 is started on natural gas with hydrogen only being introduced to the reheat combustor 20 when a threshold pressure (i.e. load) has been exceeded.

For any fuel the time required for spontaneous ignition is strongly related to the temperature of the reactants. For this reason if, in a reheat combustor 20, highly reactive fuels need to be utilized this often requires the reduction of the inlet temperature of the hot gas. In general the gas turbine is operated in such a way that the vitiated air at the injection plane is maintained at a specific temperature defined in the control algorithm.

Here, instead of being fixed the temperature set point defined in the control program is adjusted in real time to accommodate changes in the reactivity of the fuel (driven by fuel composition changes). Such changes would be handled automatically by the controller 32 by using suitable operating maps defining an appropriate inlet temperature for a given composition. The fuel composition can be identified either by real time monitoring of a time varying fuel with an instrument such as a gas chromatograph. Alternatively where the fuel is blended from two or more sources the output from flow meters in the individual streams may be monitored to determine the composition at inlet to the burner.

In most premixed burners, flame stabilization is achieved by introducing complex aerodynamic structures that balance the speed at which the flame front attempts to propagate into the premixed reactants. For this reason it is possible to cause the flame to stabilize in free space. The speed at which the flame propagates is a function, among other parameters, of the composition of the reactants, and in particular the fuel type and oxidant concentration. It is thus possible to produce an operating point (whether by the choice of fuel, or by limiting the oxidant availability (e.g. flue gas recirculation), or by alternative means) where a significant imbalance exists between the velocity in the flow field and the propagation speed of the flame, such that the flame velocity is lower than the flow velocity. In this situation the flame will cease to be stable and be extinguished.

Due to the high flame propagation speed of hydrogen, the controller 32 allows such flame instabilities to be avoided by adding an appropriate concentration of hydrogen to the fuel. Here, at operating conditions under which flame stability is an issue, hydrogen is added to the fuel flow to restore stability. It is further provided that the amount of hydrogen to be added can be identified automatically by an engine control algorithm based on suitable maps identifying the required hydrogen to stabilize the operating point.

The gas turbine 10 can be started on natural gas using the first stage combustor 18. The engine would run up to an operating point (approximately 6 to 8 bar) at which the increased reactivity of hydrogen at lower pressures is no longer apparent prior to the starting of the reheat combustion system.

The proportion of hydrogen in the fuel for the reheat combustor 20 is selected automatically by the controller 32. A wide range of differing hydrogen compositions can be accommodated by automatically applying a map of reheat burner inlet temperature against hydrogen composition, i.e. if a high hydrogen concentration is required this can be accommodated by de-rating the inlet temperature.

As the inlet temperature of the reheat combustor 20 is reduced, the potential for stability issues within the first stage combustor 18 could become apparent. This can be resolved by the controller 32 adding a small proportion of hydrogen, again based on an automatic operational map, to the primary combustor 18 to increase reactivity and hence extend the proportion of hydrogen that can be accommodated.

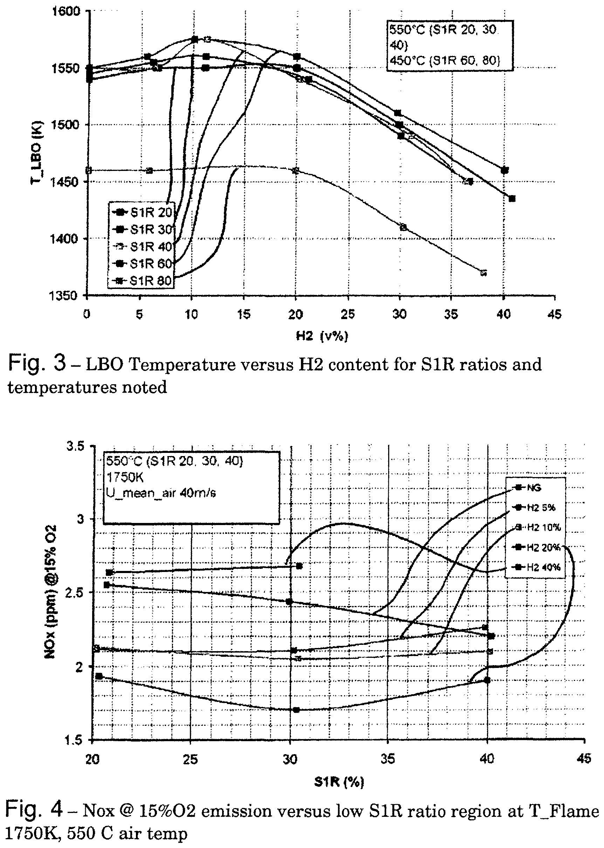

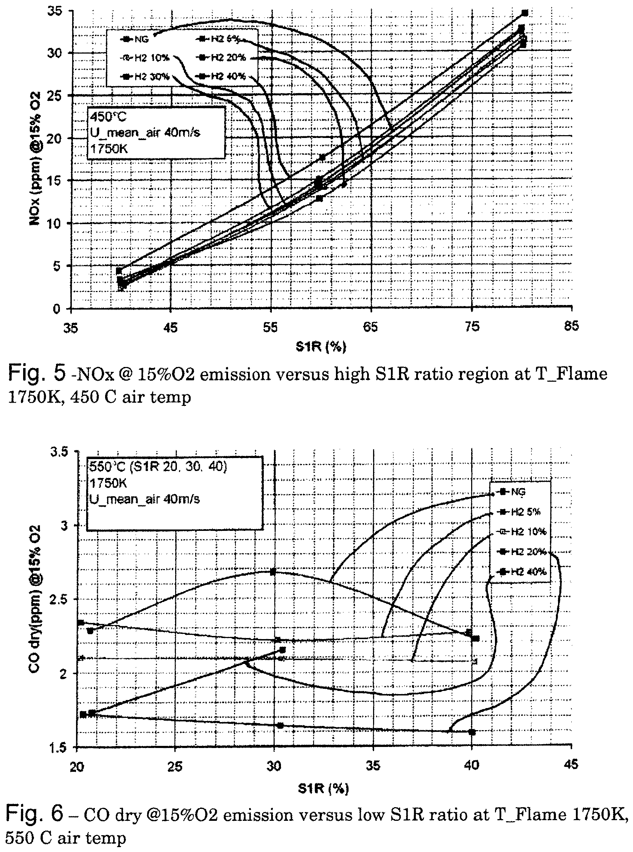

The controller 32 can also control the amount of hydrogen being added in order to control LBO. As shown in Fig. 3, the addition of hydrogen of about 20% or more of the fuel volume improves LBO. Figs. 4 and 5 show that there is a significant reduction in NOx emissions for hydrogen content of up to 20%. A further improvement can be obtained in NOx emissions by operating with a lower S1R (stage 1 ratio= fuel gas mass flow/total gas mass flow) than in a turbine running on natural gas alone.

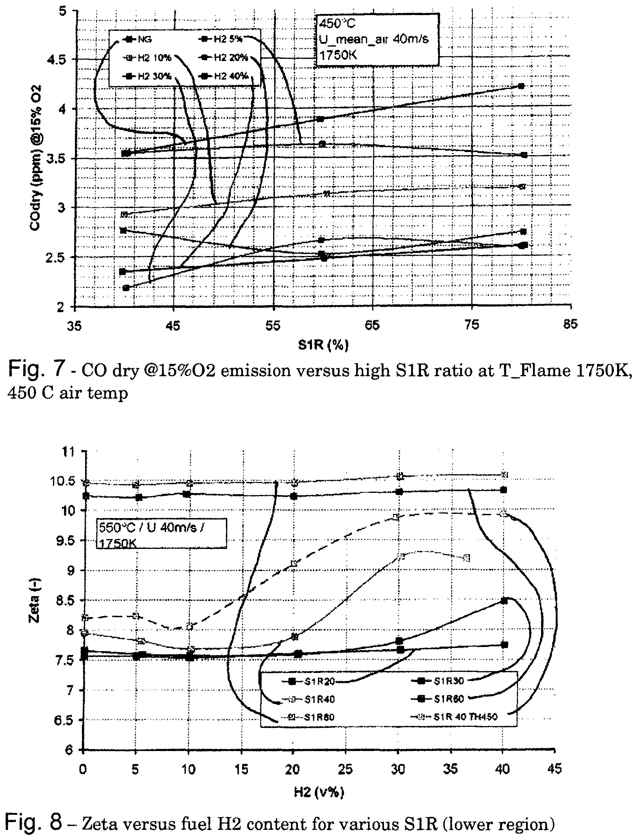

The controller 32 can also be used to lower CO emissions by the addition of hydrogen preferably in the 20% to 40% range, as shown in Figs. 6 and 7. This is believed to be due to increased fuel reactivity and OH radical formation. This effect is important at high pressures.

Figs. 8 and 9 show that pressure drop (zeta) is stable for hydrogen up to about 20%. Above 20% a modest increase in zeta is observed.

Based on this, the controller 32 can operate to optimize certain performance characteristics depending on operating conditions. Hydrogen is preferably added to the fuel mixture to about 20% for the baseload condition to reduce emissions of NOx and CO. At part load conditions, 20% hydrogen is added to the fuel mixture to continue to reduce CO emissions. 30% or more hydrogen can be added to the fuel mix to improve LBO conditions, with some sacrifice in other areas. As previously noted, the addition of the hydrogen to the fuel mix can be used in both single or reheat combustors. For reheat combustors 20, the hydrogen addition to the fuel mix can be controlled separately for the first and second stage combustors 18, 20. The controller 32 preferably utilizes a modular operation concept so that the controlled addition of hydrogen is done at different times to address different issues, with higher hydrogen (30% or more) addition at idle for LBO mitigation, intermediate hydrogen addition (10% to 30%) at part load to reduce CO and NOx emissions, and low hydrogen addition and a decreased S1 R at baseload for low NOx. This fuel modulation generally does not affect pressure drop, so no impact on engine performance is anticipated.

Fig. 10 shows a single stage turbine 10' with only a single fuel blending system 30 as discussed above that is controlled by the controller 32 in order to reduce emissions or optimize performance using a fuel mixture of natural gas and hydrogen. The components that are functionally the same as for the reheat turbine 10 are indicated with the same reference numerals.

It is understood, therefore, that this invention is not limited to the particular embodiments disclosed, but is intended to cover all modifications which are within the spirit and scope of the invention as defined by the appended claims; the above description; and/or shown in the attached drawings.

## Claims

1. A method for operating a gas turbine comprising:
starting up the turbine (10) by feeding a first fuel to a first combustor (18) for a first output turbine section (14);
the method being **characterized by** comprising the steps of:
• supplying a first fuel mix to the first combustor (18) and a second fuel mix to a second combustor (20) for a second output blade section (16) when a threshold pressure has been exceeded; wherein the first fuel mix and the second fuel mix are obtained by adding a second fuel to the first fuel; the second fuel comprising hydrogen; the first fuel mix and the second fuel mix being the same or different;
• varying the amount of hydrogen of the second fuel on the basis of the operating conditions of the turbine (10) in order to reduce at least one of NOx emissions or CO emissions.

2. The method of claim 1, wherein the step of varying the amount of hydrogen comprising adding to the second fuel at least 30% hydrogen at idle to improve lean blow off (LBO).

3. The method of claim 1, wherein the step of varying the amount of hydrogen comprising adding to the second fuel between 10% to 30% hydrogen to improve emissions of NOx and CO.

4. The method of claim 1, wherein the step of varying the amount of hydrogen comprising adding to the second fuel about 10% hydrogen at baseload to reduce NOx emissions.

5. The method of claim 1, wherein the threshold pressure is a pressure of 6 - 8 bar.

6. The method of claim 2, wherein the step of varying the amount of hydrogen of the second fuel comprise selecting the amount of hydrogen on the basis of a reheat burner inlet temperature in view of a hydrogen composition.

7. A multi-stage gas turbine (10) comprising
• a compressor (12),
• a first combustor (18) in communication with the compressor (12),
• a second combustor (20);
• a first output turbine blade section (14) downstream of the first combustor (18) and upstream of the second combustor (20);
• a second output turbine blade section (16) downstream of the second combustor (20) and in communication with the second combustor (20);
• a first blending system (30) configured for blending a first fuel and a second fuel and for providing a first fuel mix to the first combustor (18);
• a second blending system (30') configured for blending the first fuel and the second fuel and for providing a second fuel mix to the second combustor (20);
• the second fuel comprising hydrogen; the first fuel mix and the second fuel mix being the same or different;
• first fuel supply valves (34, 34') for providing the first fuel to the first blending system (30) and to the second blending system (30');
• second fuel supply valves (36, 36') for providing the second fuel to the first blending system (30) and to the second blending system (30');
the multistage gas turbine being **characterized by** comprising a controller (32) configured for:
• regulating the first fuel supply valves (34, 34') and the second fuel supply valves (36, 36') in order to supply only the first fuel to the first combustor (18) during the start of the turbine when a threshold pressure is not exceeded and to supply the first fuel mix to the first combustor (18) and the second fuel mix to the second combustor (20) when the threshold pressure is exceeded; and
• regulating the second fuel supply valves (36, 36') for varying the amount of hydrogen of the second fuel on the basis of the operating conditions of the turbine (10) in order to reduce at least one of NOx emissions or CO emissions.

8. The gas turbine of claim 7, wherein the first output turbine blade section (14) is a high pressure turbine and the second output turbine blade section (16) is a low pressure turbine.

9. The gas turbine of claim 7, wherein the first fuel supply valves (34, 34') and the second fuel supply valves (36, 36') are servo valves.

10. The gas turbine of claim 7, wherein the controller (32) is a programmable logic controller or a computer-based controller.

11. The gas turbine of claim 7, wherein the first blending system (30) and the second blending systems (30') operate independently from one another.

## Patentansprüche

1. Verfahren zum Betreiben einer Gasturbine umfassend:
Anfahren der Turbine (10) durch Zuführen eines ersten Brennstoffs zu einem ersten Brenner (18) eines ersten Turbinenschaufelabschnitts (14);
wobei das Verfahren dadurch charakterisiert ist, dass es die Schritte umfasst:
• Fördern eines ersten Brennstoffgemisches zu dem ersten Brenner (18) und eines zweiten Brennstoffgemisches zu einem zweiten Brenner (20) eines zweiten Turbinenschaufelabschnitts (16); wenn ein Druckgrenzwert überschritten wurde; wobei das erste Brennstoffgemisch und das zweite Brennstoffgemisch erhalten werden durch Hinzufügen eines zweiten Brennstoffs zu dem ersten Brennstoff; wobei der zweite Brennstoff Wasserstoff enthält; wobei das erste Brennstoffgemisch und das zweite Brennstoffgemisch gleich oder unterschiedlich sind;
• Verändern der Menge des Wasserstoffs des zweiten Brennstoffs auf Basis der Betriebsbedingungen der Turbine (10), um mindestens eine der Emissionen von NOx oder CO zu reduzieren.

2. Verfahren nach Anspruch 1, wobei der Schritt des Veränderns der Menge des Wasserstoffs umfasst, dass zu dem zweiten Brennstoff bei Leerlauf mindestens 30% Wasserstoff zugegeben wird, um das magere Abblasen (LBO) zu verbessern.

3. Verfahren nach Anspruch 1, wobei der Schritt des Veränderns der Menge des Wasserstoffs umfasst, dass zu dem zweiten Brennstoff zwischen 10% und 30% Wasserstoff zugegeben wird, um die Emissionen von NOx und CO zu verbessern.

4. Verfahren nach Anspruch 1, wobei der Schritt des Veränderns der Menge des Wasserstoffs umfasst, dass bei Grundlast zu dem zweiten Brennstoff etwa 10% Wasserstoff zugegeben wird, um die NOx-Emissionen zu reduzieren.

5. Das Verfahren nach Anspruch 1, wobei der Druckgrenzwert ein Druck zwischen 6 und 8 bar ist.

6. Das Verfahren nach Anspruch 2, wobei der Schritt des Veränderns der Menge von Wasserstoff des zweiten Brennstoffs umfasst, das Auswählen der Menge des Brennstoffs auf Basis einer Einlasstemperatur eines Zwischenerhitzers-Brenners unter Berücksichtigung einer Wasserstoffzusammensetzung.

7. Mehrstufige Gasturbine (10) umfassend
• einen Kompressor (12),
• einen ersten Brenner (18), der mit dem Kompressor (12) verbunden ist,
• einen zweiter Brenner (20);
• einen ersten Turbinenschaufelabschnitt (14) stromabwärts des ersten Brenners (18) und stromaufwärts des zweiten Brenners (20);
• einen zweiten Turbinenschaufelabschnitt (16) stromabwärts des zweiten Brenners (20), der mit dem zweiten Brenner (20) verbunden ist;
• ein erstes Mischsystem (30), das dazu eingerichtet ist, einen ersten Brennstoff und einen zweiten Brennstoff zu mischen und dem ersten Brenner (18) ein erstes Brennstoffgemisch zu liefern;
• ein zweites Mischsystem (30'), das dazu eingerichtet ist, den ersten Brennstoff und den zweiten Brennstoff zu mischen und dem zweiten Brenner (20) ein zweites Brennstoffgemischs zu liefern,
• wobei der zweite Brennstoff Wasserstoff enthält; wobei das erste Brennstoffgemisch und das zweite Brennstoffgemisch gleich oder verschieden sind;
• erste Brennstoffversorgungsventile (34, 34'), um den ersten Brennstoff zu dem ersten Mischsystem (30) und zu dem zweiten Mischsystem (30') zu liefern,
• zweite Brennstoffversorgungsventile (36, 36'), um den zweiten Brennstoff zu dem ersten Mischsystem (30) und zu dem zweiten Mischsystem (30') zu liefern;
wobei die mehrstufige Gasturbine dadurch charakterisiert ist, dass sie einen Controller (32) umfasst, der dazu eingerichtet ist:
• Steuern der ersten Brennstoffversorgungsventile (34, 34') und der zweiten Brennstoffversorgungsventile (36, 36'), um nur den ersten Brennstoff an den ersten Brenner (18) während des Starts der Turbine zu liefern, wenn ein Druckgrenzwert nicht überschritten wird und um das erste Brennstoffgemisch zu dem ersten Brenner (18) und das zweite Brennstoffgemisch zu dem zweiten Brenner (20) zu liefern, wenn der Druckgrenzwert überschritten ist; und
• Steuern der zweiten Brennstoffversorgungsventile (36, 36'), um die Menge des Wasserstoffs des zweiten Brennstoffs auf der Basis der Betriebsbedingungen der Turbine (10) zu verändern, um in mindestens eine der Emissionen von NOx oder CO zu reduzieren.

8. Gasturbine gemäß Anspruch 7, wobei der erste Turbinenschaufelabschnitt (14) eine Hochdruckturbine ist und der zweite Turbinenschaufelabschnitt (16) eine Niederdruckturbine ist.

9. Gasturbine nach Anspruch 7, wobei die ersten Brennstoffversorgungsventile (34, 34') und die zweiten Brennstoffversorgungsventile (36, 36') Servo-Ventile sind.

10. Gasturbine nach Anspruch 7, wobei der Controller (32) ein programmierbarer logischer Controller oder ein computerbasierter Controller ist.

11. Gasturbine nach Anspruch 7, wobei das erste Mischsystem (30) und das zweite Mischsystem (30') unabhängig voneinander arbeiten.

## Revendications

1. Procédé pour exploiter une turbine à gaz comprenant l'étape consistant à:
démarrer la turbine (10) en fournissant un premier combustible à un première chambre de combustion (18) pour une première section de turbine de sortie (14) ;
le procédé étant **caractérisé en ce qu'**il comprend les étapes consistant à :
fournir un premier mélange de combustible à la première chambre de combustion (18) et un second mélange de combustible à une seconde chambre de combustion (20) pour une seconde section d'aube de sortie (16) lorsqu'une pression de seuil a été dépassée ; dans lequel le premier mélange de combustible et le second mélange de combustible sont obtenus en ajoutant un second combustible au premier combustible ; le second combustible comprenant de l'hydrogène ; le premier mélange de combustible et le second mélange de combustible étant identiques ou différents ;
modifier la quantité d'hydrogène du second combustible en fonction des conditions d'exploitation de la turbine (10) afin de réduire au moins l'une parmi les émissions de NOx ou les émissions de CO.

2. Procédé selon la revendication 1, dans lequel l'étape consistant à modifier la quantité d'hydrogène comprend l'étape consistant à ajouter au second combustible, au moins 30% d'hydrogène au ralenti pour améliorer l'extinction pauvre (LBO).

3. Procédé selon la revendication 1, dans lequel l'étape consistant à modifier la quantité d'hydrogène comprend l'étape consistant à ajouter au second combustible, entre 10% et 30% d'hydrogène pour améliorer les émissions de NOx et de CO.

4. Procédé selon la revendication 1, dans lequel l'étape consistant à modifier la quantité d'hydrogène comprend l'étape consistant à ajouter au second combustible, environ 10% d'hydrogène à la charge de base afin de réduire les émissions de NOx.

5. Procédé selon la revendication 1, dans lequel la pression de seuil est une pression de 6 à 8 bar.

6. Procédé selon la revendication 2, dans lequel l'étape consistant à modifier la quantité d'hydrogène du second combustible comprend l'étape consistant à sélectionner la quantité d'hydrogène en fonction d'une température d'entrée de brûleur de réchauffage en vue d'une composition d'hydrogène.

7. Turbine à gaz à plusieurs étages (10) comprenant :
un compresseur (12),
une première chambre de combustion (18) en communication avec le compresseur (12),
une seconde chambre de combustion (20) ;
une première section d'aube de turbine de sortie (14) en aval de la première chambre de combustion (18) et en amont de la seconde chambre de combustion (20) ;
une seconde section d'aube de turbine de sortie (16) en aval de la seconde chambre de combustion (20) et en communication avec la seconde chambre de combustion (20) ;
un premier système de mélange (30) configuré pour mélanger un premier combustible et un second combustible et pour fournir un premier mélange de combustible à la première chambre de combustion (18) ;
un second système de mélange (30') configuré pour mélanger le premier combustible et le second combustible et pour fournir un second mélange de combustible à la seconde chambre de combustion (20) ;
le second combustible comprenant de l'hydrogène ; le premier mélange de combustible et le second mélange de combustible étant identiques ou différents ;
des premières valves d'alimentation en combustible (34, 34') pour amener le premier combustible au premier système de mélange (30) et au second système de mélange (30') ;
des secondes valves d'alimentation en combustible (36, 36') pour amener le second combustible au premier système de mélange (30) et au second système de mélange (30') ;
la turbine à gaz à plusieurs étages étant **caractérisée en ce qu'**elle comprend un organe de commande (32) configuré pour :
régler les premières valves d'alimentation en combustible (34, 34') et les secondes valves d'alimentation en combustible (36, 36') afin de fournir uniquement le premier combustible à la première chambre de combustion (18) pendant le démarrage de la turbine lorsqu'une pression de seuil n'est pas dépassée et pour fournir le premier mélange de combustible à la première chambre de combustion (18) et le second mélange de combustible à la seconde chambre de combustion (20) lorsque la pression de seuil est dépassée ; et
régler les secondes valves d'alimentation en combustible (36, 36') pour modifier la quantité d'hydrogène du second combustible en fonction des conditions d'exploitation de la turbine (10) afin de réduire au moins l'une parmi les émissions de NOx ou les émissions de CO.

8. Turbine à gaz selon la revendication 7, dans laquelle la première section d'aube de turbine de sortie (14) est une turbine à haute pression et la seconde section d'aube de turbine de sortie (16) est une turbine à basse pression.

9. Turbine à gaz selon la revendication 7, dans laquelle les premières valves d'alimentation en combustible (34, 34') et les secondes valves d'alimentation en combustible (36, 36') sont des valves asservies.

10. Turbine à gaz selon la revendication 7, dans laquelle l'organe de commande (32) est un organe de commande de logique programmable ou un organe de commande automatisé.

11. Turbine à gaz selon la revendication 7, dans laquelle le premier système de mélange (30) et les seconds systèmes de mélange (30') fonctionnent indépendamment les uns des autres.
